# EUROPÄISCHE PATENTSCHRIFT

(11) **EP 1 769 041 B1**
(45) Veröffentlichungstag und Bekanntmachung des Hinweises auf die Patenterteilung: **03.09.2008**
(21) Anmeldenummer: 05762086.6
(22) Anmeldetag: 13.07.2005
(51) Int. Cl.: C09J 5/00, C09J 163/00, C09J 175/04

(54) **VERFAHREN ZUM BEARBEITEN UND VERKLEBEN VON WERKSTÜCKEN AUS EINEM METALL ODER EINER METALLLEGIERUNG MIT EINER HYDRATISIERTEN OXID- UND/ODER HYDROXIDSCHICHT**
METHOD FOR TREATING AND STICKING WORK PIECES MADE OF METAL OR A METAL ALLOY COMPRISING A HYDRATED OXIDE AND/OR HYDROXIDE LAYER
PROCEDE POUR TRAITER ET COLLER DES PIECES A USINER CONSTITUEES D'UN METAL OU D'UN ALLIAGE METALLIQUE COMPORTANT UNE COUCHE D'OXYDE HYDRATE ET/OU UNE COUCHE D'HYDROXYDE

(30) Priorität: 13.07.2004 DE 102004033728
(43) Veröffentlichungstag der Anmeldung: 04.04.2007
(73) Patentinhaber: SIKA TECHNOLOGY AG, 6340 Baar (CH)
(72) Erfinder: PAHL, Dennis, 38471 Rühen (DE); BLANK, Norman, CH-8803 Rüschlikon (CH); HARTMANN, Uwe, 32805 Horn-Bad Meinberg (DE); STEGE, Michael, 38446 Wolfsburg (DE)
(74) Vertreter: Sika Patent Attorneys
(86) Internationale Anmeldenummer: PCT/EP2005/007623
(87) Internationale Veröffentlichungsnummer: WO 2006/005606

(56) Entgegenhaltungen:
- EP-A- 1 359 202
- DE-A1- 3 829 675
- DE-A1- 19 523 498

## Beschreibung

Die Erfindung betrifft ein Verfahren zur Bearbeitung einer Klebefläche eines Werkstückes aus einem Metall oder einer Metalllegierung mit einer hydratisierten Oxid- und/oder Hydroxidschicht sowie ein Verfahren zum Verkleben von zwei Werkstücken, wobei mindestens ein Werkstück aus einem Metall oder einer Metalllegierung mit einer hydratisierten Oxid- und/oder Hydroxidschicht besteht und die Werkstücke jeweils eine mindestens eine Klebefläche aufweisen.

Abgesehen von den Edelmetallen weisen die meisten Metalle und Metalllegierungen eine hydratisierte Oxid- und/oder Hydroxidschicht auf. Metalle oder Metalllegierungen mit einer hydratisierten Oxid- und/oder Hydroxidschicht werden breit eingesetzt in der Technik, insbesondere in der industriellen Fertigung.

Diese Werkstoffe wurden bisher durch traditionelle Verbindungsverfahren wie beispielsweise Nieten, Schweißen oder Schrauben verbunden. Es zeigte sich jedoch, dass diese traditionellen Verbindungsmethoden mit diversen Nachteilen verbunden sind. Es treten beispielsweise an den Verbundstellen bei Belastung des Verbundes sehr hohe Spannungsspitzen auf. Weiterhin sind solche traditionellen Verbunde vielfach undicht und beim Verbinden von unterschiedlichen Materialien entsteht vielfach Kontaktkorrosion. Schließlich eignen sich insbesondere Leichtmetallwerkstoffe, vor allem Aluminium, schlecht für ein Verschweißen mit anderen Werkstoffen.

Das Verbinden von Werkstoffen durch Kleben mittels Klebstoffen ist ebenfalls ein bekanntes Verbindungsverfahren. Unter dem Begriff Klebstoff versteht man hierbei einen nichtmetallischen Werkstoff, der Werkstücke durch Oberflächenhaftung (Adhäsion) und innere Festigkeit (Kohäsion) miteinander verbindet.

Das Verkleben bringt im Vergleich zu anderen Verbindungsverfahren wie Nieten, Schweißen und Schrauben zahlreiche Vorteile mit sich. So erhält man eine gleichmäßige Spannungsverteilung über die gesamte Klebefläche, die sich sowohl auf die statische als auch auf die dynamische Festigkeit positiv auswirkt. Des Weiteren kommt es zu keiner Verletzung der Oberfläche und Gefügestruktur. Zusätzlich können Klebstoffe eine abdichtende Funktion einnehmen. Ein weiterer Vorteil kommt besonders beim Leichtbau zum Tragen, da durch den Einsatz von Klebstoffen eine erhebliche Gewichtsersparnis erreicht werden kann. Nicht zuletzt können durch Klebstoffe auch unterschiedliche Werkstoffe miteinander verbunden werden. Verklebungen erfolgen typischerweise flächig, insbesondere vollflächig.

Für ein zuverlässiges und belastbares Verkleben von Werkstoffen ist es jedoch wichtig, dass die Klebefläche so vorbehandelt wird, dass der Klebstoff eine feste Verbindung mit der Klebefläche eingehen kann. Dabei stellt insbesondere die sich bei Metallen oder Metalllegierungen mit einer hydratisierten Oxid- und/oder Hydroxidschicht die an Umgebungsluft ausbildete hydratisierte Oxid- und/oder Hydroxidschicht ein Problem dar. Diese natürlich gewachsenen Schichten entstehen in einem unregelmäßig ablaufenden und nicht genau definierten Prozess und weisen Oxide, Hydroxide und zuweilen auch Oxyhydroxide, vielfach auch gemischt vorliegend, auf.

Aufgrund der unterschiedlichen Strukturen der gebildeten Produkte weisen solch natürlich gewachsene Oberflächen Poren auf, in denen sich leicht Wasser einlagert. Zumindest in der obersten Schicht tritt eine Hydratisierung auf. Diese oberflächige Schicht hat eine schlechte Anbindung und Haftung mit der Werkstoffoberfläche und kann bei einer Belastung zu unvorhersehbaren Ablöseerscheinungen oder Brüchen innerhalb dieser Oxid- und/oder Hydroxidschicht führen. Weiterhin führt die Oberflächenstruktur und Hydratisierung beim Verkleben zu einer sogenannten "Weak Boundary Layer" und damit zum vorzeitigen Versagen einer Verklebung dieser Werkstücke.

Die Klebeflächen müssen auch frei von Korrosion bleiben, damit die Klebeverbindung nicht aufgrund einer zwischen dem Klebstoff und der Klebefläche auftretenden Reaktion des Metalls oder der Metalllegierung mit Feuchtigkeit aus der Umgebung verschlechtert wird und bei Dauerbelastung versagt.

Ein weiteres Problem dieser Oberflächen, auch wenn durch zusätzliche Behandlungsverfahren eine definierte Oxidschicht aufgebracht wird, wie dies beispielsweise beim Eloxal (Elektrisch oxidiertes Aluminium) der Fall ist, besteht darin, dass die Oxidschicht wegen der geringen Oberflächenenergie nur schlecht mit einem Klebstoff vollflächig benetzt werden kann. Die Klebeflächen werden dadurch nicht ausreichend miteinander verbunden.

DE,A,28 29 675 beschreibt ein Verfahren der zur Verklebung an Holzwerkstoffen vorgesehenen Flächen von Profilen aus polymeren Werkstoff.

DE,A,195 23 498 beschreibt ein Karosserieverbundteil und ein Verfahren zur Herstellung von sphärische geformten Karosserieverbundteilen.

### Technisches Problem

Der vorliegenden Erfindung liegt daher das technische Problem zugrunde, das Verkleben von Werkstücken aus Metallen oder Metalllegierungen mit einer hydratisierten Oxid- und/oder Hydroxidschicht zu verbessern.

### Beschreibung der Erfindung

Das zuvor aufgezeigte technische Problem wird gemäß einer ersten Lehre der Erfindung durch ein Verfahren zur Bearbeitung einer Klebefläche eines Werkstückes aus einem Metall oder Metalllegierung mit einer hydratisierten Oxid- und/oder Hydroxidschicht mit den Merkmalen des Anspruches 1 gelöst.

Weitere Ausführungsformen werden durch den Ansprüchen 2 bis 14 definiert.

Das erfindungsgemäße Verfahren zur Bearbeitung einer Klebefläche eines Werkstückes aus einem Metall oder Metalllegierung mit hydratisierte Oxid- und/oder Hydroxidschicht weist die folgenden Verfahrensschritte auf:
- Reinigen der Klebefläche,
- Aktivieren der Klebefläche,
- Beschichten der Klebefläche zumindest teilweise mit einem Haftvermittler und
- Nachbehandeln des Haftvermittlers.

Beim Metall oder bei einer Metalllegierung mit hydratisierter Oxid- und/oder Hydroxidschicht handelt es sich hierbei insbesondere um die Metalle Titan, Vanadium, Chrom, Mangan, Eisen, Kobalt, Nickel, Kupfer, Zink, Zinn, Magnesium, Aluminium sowie deren Legierungen untereinander oder deren Legierungen mit anderen Legierungsbestandteilen wie Silizium oder Kohlenstoff. Unter den Legierungen sind insbesondere diverse Stähle und Aluminiumlegierungen bevorzugt. Besonders bevorzugt sind Leichtmetallwerkstoffe wie Aluminium-, Magnesium- oder Titanwerkstoffe. Ein bevorzugter Werkstoff mit einer hydratisierten Oxid- und/oder Hydroxidschicht ist Aluminium. Schließlich können auch Werkstoffe wie Silizium und Siliziumoxid (Glas) eine Oxid- und/oder Hydroxidschicht aufweisen und fallen also ebenfalls in den Anwendungsbereich der vorliegenden Erfindung.

Im Folgenden wird die Erfindung anhand des Werkstoffes Aluminium beschrieben. Jedoch ist die Erfindung nicht auf Aluminiumwerkstoffe beschränkt. Allgemein betrifft die Erfindung Metalle oder Metalllegierungen mit einer hydratisierten Oxid- und/oder Hydroxidschicht.

Aluminiumwerkstoffe sind vielseitig verwendbare Werkstoffe, die beispielsweise in der Fahrzeugherstellung einen immer größeren Anteil erhalten. Neben dem Fahrzeugbau werden Aluminiumwerkstoffe beispielsweise auch beim Bau von Flugzeugen, für Gebäudeteile, insbesondere für Fassadenteile oder Fensterrahmen, oder für die Herstellung von Möbeln oder Haushaltsgeräten verwendet. Der Grund für den steigenden Anteil gegenüber anderen Metallen liegt dabei vor allem im geringen Gewicht.

Aluminiumwerkstoffe werden in verschiedener Weise angepasst für die spätere Verwendung hergestellt. Im Fahrzeugbau besteht der Aluminiumwerkstoff insbesondere aus einem Aluminiumblech, einem Aluminiumstrangpressprofil oder einer Aluminiumdruckgusslegierung. Eine bevorzugte Legierung im Fahrzeugbau besteht aus einer Aluminium-Magnesium-SiliziumVerbindung (AlMgSi). Diese wird nach einer Verarbeitung mittels eines Lackierverfahrens, insbesondere einer Kathodischen Tauchlackierung nach einer Beizpassivierung lackiert und dauerhaft gegenüber Umwelteinflüssen geschützt.

In anderen Anwendungsbereichen wird der Aluminiumwerkstoff ohne eine weitere Lackierung den Umwelteinflüssen ausgesetzt. In diesen Fällen wird der Aluminiumwerkstoff gezielt durch eine elektrolytische Oxidation mit einer schützenden Oxidschicht versehen. Ein derartiger Werkstoff ist auch als Eloxal (Elektrisch Oxidiertes Aluminium) bekannt.

Die Klebefläche wird vor dem Auftrag des Haftvermittlers vorbehandelt, also gereinigt und aktiviert. Dadurch befindet sich die Klebefläche in einem weitgehend definierten Zustand. Ziel ist dabei, dass die Oberfläche der Klebefläche überwiegend, vorzugsweise nahezu vollständig keine Oberflächenschicht mit undefinierter Struktur aufweist.

Das Reinigen und Aktivieren der Klebefläche kann entweder in einem Schritt mittels einer Plasmabehandlung oder einer abrasiven mechanischen Behandlung erfolgen. Bei der Plasmabehandlung bleibt die Oxidschicht des Metalls oder der Metalllegierung, insbesondere die Aluminiumoxidschicht, bestehen, während die abrasive Technik diese weitgehend entfernt. Ebenso können das Reinigen und das Aktivieren in zwei aufeinander folgenden Schritten erfolgen.

Der Haftvermittler wird dann auf die gereinigte und aktivierte Klebefläche - mit oder ohne Oxidschicht - aufgebracht, der dann in einer Nachbehandlung unter Energieeinfluss chemisch umgewandelt wird. Wenn danach der Klebstoff auf den Haftvermittler aufgebracht wird, ergeben sich gute Haftungseigenschaften und eine dauerhafte Klebeverbindung.

Durch die zuvor beschriebene Vorbehandlung, also Reinigen und Aktivieren der Klebefläche des Werkstückes werden Oberflächenzustände erzeugt, die die Voraussetzungen für gute Haftungseigenschaften der Klebeschichten bieten. Aus diesem Grund ist es vorteilhaft, das Verkleben der vorbehandelten Werkstücke entweder direkt, anschließend oder in einem möglichst kurzen, zeitlichen Abstand durchzuführen, um eine erneute Deaktivierung der Oberfläche zu vermeiden.

### Reinigen

Um die Klebbarkeit der Metall- oder Metalllegierungsoberfläche mit hydratisierten Oxid- und/oder Hydroxidschicht zu verbessern, ist es vorteilhaft, den Oberflächenzustand der Oxid- und/oder Hydroxidschicht und den Grad der Verschmutzung zu ändern. Hierzu existieren eine Reihe von mechanischen, chemischen und physikalischen Verfahren, die nachfolgend beschrieben werden.

Bei der Reinigung wird die Klebefläche von oberflächlich vorhandenen Verschmutzungen gereinigt. Diese Verschmutzungen sind hauptsächlich Kohlenwasserstoffe wie Fette und Öle.

Die Vorbehandlung der Klebefläche kann bewirken, dass die nach der Herstellung des Werkstückes bereits entstandene Oxid- und/oder Hydroxidschicht auf der Oberfläche entweder zumindest teilweise entfernt oder in einen dauerhaften und fest mit der Oberfläche verbundenen Zustand überführt wird.

Die Energiezufuhr für die Vorbehandlung wird bevorzugt mit einer Plasmaquelle bzw. Plasmadüse erzeugt, bei der mittels einer unter Anlegen einer hochfrequenten Hochspannung in einem Düsenrohr zwischen zwei Elektroden mittels einer nicht-thermischen Entladung aus einem Arbeitsgas ein Plasmastrahl erzeugt wird. Dabei steht das Arbeitsgas vorzugsweise unter Atmosphärendruck, man spricht auch von einem atmosphärischen Plasma. Das beschriebene Verfahren ist aber nicht auf die Anwendung von atmosphärischen Plasmen beschränkt.

Der Plasmastrahl tritt aus der Düsenöffnung aus, wobei eine der beiden Elektroden im Bereich der Düsenöffnung angeordnet ist. Der nicht-thermische Plasmastrahl weist bevorzugt außerhalb der Plasmadüse bei einer geeignet eingestellten Strömungsrate keine elektrischen Streamer auf, also Entladungskanäle der elektrischen Entladung, so dass nur der energiereiche, aber niedrig temperierte Plasmastrahl auf den Haftvermittler gerichtet wird. Zur Charakterisierung des Plasmastrahls wird auch von einer hohen Elektronentemperatur und einer niedrigen Ionentemperatur gesprochen. Aus dem Stand der Technik der EP 0 761 415 A1 und der EP 1 335 641 A1 sind derartige Plasmaquellen an sich bekannt.

In bevorzugter Weise wird der Plasmastrahl mit Hilfe einer atmosphärischen Entladung in einem Sauerstoff enthaltenden Arbeitsgas erzeugt. Dadurch wird die Reaktivität des Plasmastrahls erhöht. In bevorzugter Weise als Arbeitsgas Luft verwendet. Ebenso kann ein Arbeitsgas aus einer Mischung aus Wasserstoff und Stickstoff eingesetzt werden, ein sogenanntes Formiergas.

Die nicht-thermische Plasmaentladung erfolgt insbesondere unter Anwendung einer hochfrequenten Hochspannung, wobei eine Folge von Entladungen zwischen zwei Elektroden der Plasmadüse erzeugt wird und das Arbeitsgas zu einem aus der Plasmadüse austretenden Plasma angeregt wird. Gerade die hochfrequente Folge der Entladungen gewährleistet, dass kein thermisches Gleichgewicht im Entladungsraum entsteht. Somit kann auch im Dauerbetrieb das Ungleichgewicht zwischen Elektronentemperatur und Ionentemperatur aufrecht gehalten werden.

Die atmosphärische Plasmabehandlung ist zur Reinigung besonders gut geeignet, wenn es darum geht, weitgehend fettfreie Oberflächen zu erhalten. Die Effektivität der Plasmabehandlung hängt natürlich von der Wahl des Prozessgases, der Leistung, der Behandlungsdauer und des Anlagenkonzeptes ab und es können je nach Anforderung Anpassungen vorgenommen werden.

Das zuvor beschriebene Verfahren ist weniger gut geeignet für die Beseitigung von Partikelverunreinigungen, z.B. Späne oder Metallflitter sowie von anorganischen Verunreinigungen als Salze oder Fingerabdrücke, die sich nicht in gasförmige Produkte überführen lassen. Weiterhin ist das Verfahren weniger gut bei sehr dicken Kontaminationsschichten, d.h. Kontamination durch eine Beölung (Korrosionsschutzöle und Schneid-/Pressöle) oder durch einen Trockenschmierstoff, in der Größenordnung von über 4 g/m² geeignet. Da das Entfernen der Kontaminationsschichten iterativ erfolgen kann, können auch dickere Schichten abgetragen werden, jedoch stellen sich dabei wirtschaftliche Probleme. Daher können in diesen Verschmutzungsfällen weitere Vorbehandlungsverfahren entweder alternativ oder zusätzlich zur Plasmastrahlvorbehandlung eingesetzt werden.

Neben der Vorbehandlung der Klebefläche mittels eines atmosphärischen Plasmastrahls ist es auch möglich, die Klebefläche mechanisch, chemisch und/oder elektrochemisch oder mittels eines Strahlverfahrens (Laser, UV-Licht, Elektronenstrahl) vorzubehandeln. Auch wenn die Gründlichkeit der Vorbehandlung nicht so weitgehend wie bei der Plasmavorbehandlung ist, können diese Verfahren ebenfalls eingesetzt werden.

Die Reinigung innerhalb des erfindungsgemäßen Verfahrens ist also nicht auf die bevorzugte Anwendung der Plasmabehandlung beschränkt. Weitere Beispiele der Vorbehandlung sind die Folgenden:
- Reinigen durch Waschen der Klebefläche mit Lösemitteln;
- Mechanische Vorbehandlung durch Schleifen, Schmirgeln, Bürsten, Sandstrahlen oder CO₂-Strahlen;
- Chemische Vorbehandlung durch Beizen mit sauren oder alkalischen Lösungen;
- Thermische Verfahren durch Beflammung;
- Elektrochemische Vorbehandlung durch Phosphatieren, Chromatieren, Entlackung oder Strippen;
- Physikalische Vorbehandlung durch atmosphärisches Plasma, Corona-Entladung, UV-Behandlung, Laser, oder Normaldruck- oder Niederdruckplasma.

Beim Sandstrahlen und beim CO₂-Strahlen wird ein Strahlmittel aus Festkörperpartikeln mit hoher Geschwindigkeit auf die zu behandelnde Oberfläche gerichtet. An der Oberfläche wird durch die auftreffenden Partikel das Oberflächenmaterial, insbesondere die Aluminiumoxidschicht verformt, verdichtet, komprimiert und/oder abgetragen. Es entsteht eine rauhe Aluminiumwerkstoffoberfläche mit einem charakteristischen Erscheinungsbild. Im Gegensatz zu den meisten chemischen Oberflächenbehandlungsverfahren ist das Strahlen vergleichsweise umweltfreundlich und bei Vermeidung von Staubbelastungen auch hinsichtlich des Arbeitsschutzes risikoärmer.

Beim Niederdruckplasmaverfahren werden die zu behandelnden Teile in einen Behälter eingebracht, der zunächst evakuiert wird, und bei einem Innendruck von 10 bis 500 Pa (Feinvakuum) wird etwas Prozessgas, welches vorzugsweise Sauerstoff und Edelgas ist, ionisiert. Die Verbesserung der Klebfestigkeit hängt vom Plasmagas und von der Behandlungsdauer ab.

Es hat sich gezeigt, dass die Plasmavorbehandlung und Plasmareinigung Vorteile gegenüber den alternativen Verfahren hat. Die wichtigsten Vorteile sind hierbei:
- hoher Entfettungsgrad
- keine Trocknung nötig
- geeignet für alle Materialien
- umweltfreundlich
- geringe Betriebskosten
- leicht steuerbarer Prozess
- Änderung der Oberflächenenergie.
- gute Klebfestigkeit.
- die Klebungen sind alterungsbeständig.
- anwendbar bei Lackierprozessen.
- sehr lange Lagerfähigkeit.
- schnelle Integrierbarkeit in Fertigungsabläufe.

### Aktivieren

Erfindungsgemäß wird die Klebefläche mit einem atmosphärischen Plasmastrahl aktiviert, damit eine bessere Benetzbarkeit und eine bessere Reaktionsfähigkeit der Klebefläche für den Haftvermittler erreicht wird. Dabei ist es natürlich bevorzugt, dass die Vorbehandlung und die Aktivierung der Oberfläche in einem Arbeitsschritt mittels einer Anwendung des Plasmastrahls durchgeführt wird. Bei den aufgeführten alternativen Vorbereitungsmethoden ist der Schritt der Aktivierung durch den Plasmastrahl gegebenenfalls nachgeschaltet.

Das Aktivieren der weiterhin mit einer Oxid- und/oder Hydroxidschicht behafteten Klebefläche mittels eines Plasmastrahls bewirkt eine Modifikation der Oxid- und/oder Hydroxidschicht an der Oberfläche des Werkstückes. In der Regel liegt die Oxid- und/oder Hydroxidschicht vor der Aktivierung, insbesondere oberflächlich, in einer hydratisierten Form vor. Dieses gilt insbesondere dann, wenn die Oxid- und/oder Hydroxidschicht des Metalls oder der Metalllegierung an Umgebungsluft unkontrolliert entstanden ist.

Während der Energiezufuhr durch den Plasmastrahl wird die Oxid- und/oder Hydroxidschicht dehydratisiert, wodurch eine Umwandlung in eine Oxidschicht und gegebenenfalls eine Modifikation der Kristallstruktur des Oxides erfolgt. Mit anderen Worten, es werden die in der Oxid- und/oder Hydroxidschicht vorhandenen Wasser beziehungsweise OH-Gruppen entfernt. Dazu ist insbesondere der Einsatz der Plasmaaktivierung geeignet.

Die oberflächige, zuvor relativ weiche hydratisierte Oxid- und/oder Hydroxidschicht wird somit konsolidiert und gehärtet.

Da es bei der Aktivierung hauptsächlich um eine hohe Energiezufuhr geht, können sowohl oxidierende als auch nicht oxidierende Arbeitsgase bei der Plasmaerzeugung eingesetzt werden. Ebenso ist die Aktivierung der Metall- oder Metalllegierungsoberfläche, insbesondere der Aluminiumwerkstoffoberfläche, unabhängig davon, ob während der Plasmabehandlung Entladungskanäle (Streamer) auf die Oberfläche überspringen oder nicht. Entscheidender Faktor ist die Übertragung einer hohen Leistungsdichte auf die Oberfläche.

Die so modifizierte Oxidoberfläche ist chemisch aktiv, so dass die Anlagerung des Haftvermittlers stark vereinfacht wird.

Überraschenderweise hat sich also gezeigt, dass bei der Aktivierung mit einem Plasmastrahl die hydratisierte Oxid- und/oder Hydroxidschicht des Metalls oder der Metalllegierung sich in eine verfestigte Form verfestigt und verlässlich verklebt werden kann, insbesondere ohne dass hierbei eine "weak boundary layer" entsteht.

Eine andere Art der Oberflächenaktivierung wird bei den oben beschriebenen abrasiven Verfahren, insbesondere beim CO₂-Strahlen erreicht. Beim abrasiven Verfahren wird die hydratisierte Oxid- und/oder Hydroxidschicht weitgehend vollständig abgetragen, so dass die metallische Oberfläche, frei liegt. Diese metallische Oberfläche ist an sich chemisch aktiv, so dass - vorzugsweise mit kurzem zeitlichen Abstand - der Haftvermittler auf die freie Werkstoffoberfläche aufgetragen wird. Während der Nachbehandlung wird dann eine direkte Verbindung zwischen dem Haftvermittler und der Metall- oder Metalllegierungsoberfläche erzeugt. Je nach Werkstoff bildet sich unmittelbar nach dem Freilegen der freien metallischen Oberfläche sofort eine nicht-hydratisierte, kontrollierte Oxidschicht.

### Haftvermittler

Die Aufgabe des Haftvermittlers besteht darin, eine gute Haftung zwischen der Metall- oder Metalllegierungsoberfläche und dem Klebstoff zu ermöglichen. Haftvermittler bestehen daher in den meisten Fällen aus verdünnten Lösungen der Klebstoffgrundstoffe, die auch für das nachfolgende Verkleben verwendet werden sollen.

Die Haftvermittler werden in der Regel im Walz-, Sprüh-oder Tauchverfahren auf die Werkstücke aufgebracht und bei Temperaturen unterhalb der später erforderlichen Aushärtetemperatur des Klebstoffs abgelüftet. Während der Ablüftezeit von typischerweise einigen Minuten verflüchtigt sich das bevorzugt vorhandene Lösungsmittel des Haftvermittlers weitgehend und unter dem Einfluss von Luftfeuchtigkeit kann die Vernetzungsreaktion der Haftvermittlersubstanz mit sich und mit der Kleboberfläche zumindest partiell erfolgen. Durch diese Vorgehensweise wird gewährleistet, dass die Haftvermittlersubstanz möglichst homogen auf der mit Haftvermittler behandelten Klebefläche verteilt wird, so dass nach der anschließend daran erfolgten Nachbehandlung ein guter Verbund zur Metall- oder Metalllegierungsoberfläche und zu dem später aufgebrachten Klebstoff sichergestellt wird.

In bevorzugter Weise wird die Klebefläche mit einem zumindest teilweise ein Silan aufweisenden Haftvermittler beschichtet.

Insbesondere wird ein Haftvermittler verwendet, der eine Zusammensetzung enthält oder aus mindestens einer Haftvermittlersubstanz besteht, welche ausgewählt ist aus der Gruppe umfassend Organo-Siliziumverbindungen, Organo-Titanverbindungen und Organo-Zirkoniumverbindungen. Diese Verbindungen haben sich als besonders vorteilhaft herausgestellt. Jedoch ist die Erfindung nicht auf diese Verbindungen beschränkt.

Die Haftvermittlerzusammensetzung kann auch Mischungen von mindestens einer Organo-Siliziumverbindung mit mindestens einer Organo-Titanverbindung und/oder mit mindestens einer Organo-Zirkoniumverbindung umfassen. Ebenso kann sie Mischungen von mindestens einer Organo-Titanverbindung mit mindestens einer Organo-Zirkoniumverbindung enthalten. Bevorzugt enthält die Haftvermittlerzusammensetzung Mischungen von mindestens einer Organo-Siliziumverbindung mit mindestens einer Organo-Titanverbindung.

Bevorzugter Weise weist der Haftvermittler ein Lösungsmittel, insbesondere ein leichtflüchtiges Lösungsmittel auf. Somit lässt sich der Haftvermittler einerseits gut und gleichmäßig auftragen und andererseits kann die Nachbehandlung bereits kurz nach dem Auftragen des Haftvermittlers durchgeführt werden.

### Nachbehandlung

Die Nachbehandlung des Haftvermittlers erfolgt in bevorzugter Weise durch eine Plasmabehandlung und gegebenenfalls eine zusätzliche Wärmebehandlung.

Bei der Plasma-Nachbehandlung wird die Energie aus dem Plasmastrahl auf das Material des Haftvermittlers übertragen. Hierbei wird die Energie des Plasmagases, das eine hohe Elektronenanregung aufweist, bei Auftreffen des Plasmas auf die Oberfläche des Haftvermittlers zumindest teilweise auf den Haftvermittler übertragen.

Die Nachbehandlung des Haftvermittlers wird bevorzugt mit einer Plasmaquelle bzw. Plasmadüse durchgeführt, bei der mittels einer unter Anlegen einer hochfrequenten Hochspannung in einem Düsenrohr zwischen zwei Elektroden mittels einer nicht-thermischen Entladung aus einem vorzugsweise unter Atmosphärendruck stehenden Arbeitsgas ein Plasmastrahl erzeugt wird. Siehe dazu die oben bereits beschriebene Arbeitsweise der Plasmaquelle.

Aufgrund der hohen Elektronentemperatur erfolgt ein hoher Energieübertrag auf den Haftvermittler, ohne dass es zu einem starken Aufheizen des Materials kommt. Dafür ist wiederum die niedrige Ionentemperatur verantwortlich. Die chemische Energie der Elektronenanregung kann direkt in die Reaktion des Materials des Haftvermittlers umgesetzt werden. Dadurch wird eine chemische Reaktion des Haftvermittlers mit der Klebefläche, die eine freigelegte metallische Oberfläche oder, bevorzugt, eine Oxidschicht eines Metalls oder einer Metalllegierung aufweist, erreicht. Dies stellt eine Voraussetzung für eine starke Bindung der späteren Klebeverbindung dar.

In bevorzugter Weise wird die Klebefläche also mit einem atmosphärischen Plasmastrahl nachbehandelt, wobei insbesondere ein gleicher Plasmastrahl wie bei der Vorbehandlung der Klebefläche eingesetzt wird. Daher ist es prinzipiell möglich, die gleiche Plasmadüse sowohl für die Vorbehandlung als auch die Nachbehandlung einzusetzen.

Weiterhin kann der Haftvermittler zusätzlich zur Plasma-Nachbehandlung noch einer Wärmebehandlung unterzogen werden, um die Aushärtereaktion zu vervollständigen. Für die Wärmenachbehandlung wird der Haftvermittler mindestens 5 min, vorzugsweise mindestens 10 min, bei mindestens 140°C, vorzugsweise bei mindestens 155°C, insbesondere bei mindestens 170°C erhitzt.

Durch die Energiezufuhr durch den Plasmastrahl und gegebenenfalls durch eine Wärmezufuhr wird im Haftvermittler eine chemische Reaktion hervorgerufen und dieser chemisch umgewandelt. Da keinerlei Bestandteile der organische Reste des Haftvermittlers mit oberflächenanalytischen Methoden, wie beispielsweise ESCA, in messbaren Mengen nachgewiesen werden können, ist davon auszugehen, dass die Haftvermittlersubstanz durch die Nachbehandlung weitgehend zersetzt wird und dessen Halbmetall- oder Metallatome, insbesondere Si und/oder Ti und/oder Zr, mit der freien metallischen Oberfläche bzw. der Oxidoberfläche des Metalls oder der Metalllegierung in Wechselwirkung treten. Es wird angenommen, dass sich hierbei Einlagerungsverbindungen gegebenenfalls Legierungen, bilden.

Durch diese chemische Reaktion im Rahmen der Nachbehandlung wird die Oberfläche chemisch modifiziert. Nach Beenden der Reaktion ist keine separate Schicht erfassbar. Es tritt also durch die chemische Reaktion im Rahmen der Nachbehandlung im Gegensatz zur Bildung eines Haftvermittlerfilms mit organischen Bestandteilen, welcher durch Hydrolyse und Vernetzung der Haftvermittlersubstanzen unter dem Einfluss von Feuchtigkeit erfolgt, kein Abscheiden einer Schicht auf der Klebefläche, sondern eine chemische Modifikation der metallischen oder metalloxidischen Oberfläche des Werkstoffes auf.

Zumindest für den bevorzugten Werkstoff Aluminium besteht die Vermutung, dass die aktivierte Aluminiumoxidschicht eine sechseckige wabenförmige Struktur aufweist, in die durch die Nachbehandlung des Haftvermittlers die Silizium-, Titan- oder Zirkoniumatome eingelagert werden. Dabei handelt es sich dann um eine nanoskalige Struktur.

Schließlich sei erwähnt, dass eine Nachbehandlung des Haftvermittlers unter besondere Umständen auch durch eine alleinige Wärmebehandlung erfolgen kann.

### Kleben

Das oben aufgezeigte technische Problem wird erfindungsgemäß auch durch ein Verfahren zum Verkleben von zwei Werkstücken gelöst, wobei mindestens ein Werkstück aus einem Metall oder einer Metalllegierung mit einer hydratisierten Oxid- und/oder Hydroxidschicht besteht und wobei die Werkstücke jeweils mindestens eine Klebefläche aufweisen. Die Klebefläche des mindestens einen Werkstückes aus einem Metall oder einer Metalllegierung mit einer hydratisierten Oxid- und/oder Hydroxidschicht mit einem erfindungsgemäßen Verfahren zur Bearbeitung einer Klebefläche bearbeitet und für das Kleben vorbereitet.

Anschließend wird auf mindestens eine Klebefläche ein Klebstoff aufgebracht und die Werkstücke werden mit ihren Klebeflächen in Anlage aneinander gebracht. Abschließend wird der Klebstoff ausgehärtet.

Somit ist es erfindungsgemäß möglich, ein stabiles und dauerhaftes Verkleben zweier Werkstücke zu erreichen, von denen ein Werkstück aus einem Metall oder einer Metalllegierung mit einer hydratisierten Oxid- und/oder Hydroxidschicht besteht. Das zweite Werkstück kann aus demselben Metall oder derselben Metalllegierung wie das erste Werkstück bestehen, oder aus einem anderen Metall oder einer anderen Metalllegierung mit einer hydratisierten Oxid- und/oder Hydroxidschicht oder aus einem anderen Material, wie Kunststoff oder einem natürlichen Stoff, bestehen. In jedem Fall wird aufgrund der Vorbearbeitung der Klebefläche eine gute Haftung des Klebstoffes mit dem Metall oder der Metalllegierung erreicht.

Es gibt eine große Auswahl an Klebstoffen, die für das Verkleben von Werkstücken bestehend aus einem Metall oder einer Metalllegierung mit einer hydratisierten Oxid- und/oder Hydroxidschicht geeignet sind. Dabei können einkomponentige und mehrkomponentige Klebstoffe verwendet werden.

Einkomponentige Klebstoffe haben den großen Vorteil, dass sie nicht gemischt werden müssen und dass dadurch Fehler, welche durch falsche Mischungsverhältnisse oder mangelnde Vermischung erfolgen, ausgeschlossen werden können.

Einerseits kommen einkomponentige Klebstoffe zum Einsatz, die durch physikalische Effekte eine Haftung aufbauen. Dies sind beispielsweise Lösungsmittel basierende Klebstoffe, die nicht-reaktive Polymere enthalten, als Lösungen oder Dispersionen vorliegen und sich durch Abtrocknen verfestigen, wie beispielsweise Acrylharzdispersionsklebstoffe. Grundsätzlich können diese Klebstoffe verwendet werden, sind aber lediglich für Verklebungen geeignet, bei denen nur geringe Kräfte übertragen werden müssen und bei denen sie großflächig appliziert werden. Für strukturelle Verklebungen hingegen sind solche Klebstoffe nicht geeignet.

Ebenfalls auf einem physikalischen Festigkeitsaufbau basierende Klebstoffe stellen die nicht-reaktiven Schmelzklebstoffe dar. Hierbei wird ein thermoplastisches Polymer aufgeschmolzen, heiß auf eine Fügeteiloberfläche appliziert und sofort gefügt. Durch das Abkühlen auf Raumtemperatur wird die Polymerschmelze fest und verklebt so die Fügepartner miteinander. Als Basis für solche Klebstoffe steht eine breite Palette an thermoplastischen Polymeren zur Verfügung, wodurch die Schmelztemperatur, Mechanik und Haftung des Schmelzklebstoffes in einem breiten Rahmen variiert werden kann. Nachteilig an diesen nicht-reaktiven Schmelzklebstoffen ist, dass das Aufschmelzen ein reversibler Prozess ist und demzufolge die Gefahr einer Verflüssigung der Klebstoffs bei hohen Temperaturen besteht, wodurch sich die Klebverbindung wieder lösen kann.

Weiterhin sind reaktive einkomponentige Klebstoffe zum Einsatz geeignet. Es handelt sich hierbei entweder um Systeme, die durch Einsatz einer Energiequelle vernetzt werden. Die Energiequelle kann Teilchen- oder elektromagnetische Strahlung, beispielsweise UV-, sichtbares Licht-, IR-, Mikrowellen-, Elektronen- oder Ionen-Strahlung, oder Wärme darstellen. Beispielsweise handelt es sich hierbei um einkomponentige Acrylat-, Epoxidharz, oder Polyurethan-Klebstoffe.

Typischerweise kommen hierbei solche Klebstoffe zum Einsatz, welche eine Substanz enthalten, die unter Einfluss von Strahlung oder Wärme reagieren oder eine Substanz freisetzen, die mit den reaktiven Bestandteilen des Klebstoffs reagieren oder deren Polymerisation auslösen oder katalysieren.

Beispiele für solche Klebstoffe sind hitzhärtende Epoxidharz- oder Polyurethanklebstoffe mit Inhaltstoffen wie Carbonsäuren, Anhydride, Dicyandiamid (dicy), Amin-Addukte mit Lewissäuren, wie Borverbindungen oder Säuren, oder Amin-Metallkomplexe.

Weiterhin zum Einsatz geeignet sind einkomponentige Klebstoffe, welche eine Substanz enthalten, die mit Inhaltsstoffen der Luft, insbesondere Luftfeuchtigkeit, reagieren. Diese Reaktion erfolgt bereits bei Raumtemperatur. Hierbei handelt es sich insbesondere um einkomponentige Polyurethanklebstoffe, welche Polyisocyanate, insbesondere in Form von Isocyanat-Gruppen aufweisende Polyurethanprepolymere, die mit der Luftfeuchtigkeit reagieren und aushärten.

Als besondere Unterklasse hiervon sind die reaktiven Schmelzklebstoffe zu nennen, insbesondere der reaktiven Polyurethanschmelzklebstoffe, welche entweder eine Kombination von Isocyanat-Gruppen aufweisenden Prepolymeren mit Thermoplasten oder reaktive Thermoplasten beinhalten. Solche Schmelzklebstoffe sind den nicht-reaktiven Schmelzklebstoffen vorzuziehen, da sie infolge der Vernetzung durch die Isocyanat-Gruppen kein reversibles Aufschmelzverhalten aufweisen.

Eine weitere Klasse von feuchtigkeitshärtenden einkomponentigen Klebstoffen enthalten als reaktive Verbindungen Silangruppen-enthaltende Polymere. Solche Klebstoffe sind dem Fachmann als Silikon-Klebstoffe, MS-Polymer-Klebstoffe oder Silan-terminierte Polyurethanklebstoffe bekannt.

Weiterhin sind als feuchtigkeitshärtende einkomponentige Klebstoffe die Cyanacrylat-Klebstoffe, welche beispielsweise unter dem Begriff "Superglue" in der Öffentlichkeit bekannt sind, zu erwähnen.

Die zweikomponentigen Klebstoffe besitzen den großen Vorteil, dass mit ihnen die Eigenschaften des Klebstoffes einfach, beispielsweise durch eine Verwendung einer anderen Härterkomponente, den Bedürfnissen der Klebeanwendung angepasst werden, und dass hiermit sehr schnelle, äußerst starre oder äußerst elastische Verklebungen erreicht werden können.

Als zweikomponentige Klebstoffe geeignet sind grundsätzlich alle bekannten Klebstoffe, welche durch eine Polyaddition oder durch ein radikalische Polymerisation vernetzen. Hierbei werden die miteinander reaktiven Komponenten separat gelagert und während oder unmittelbar vor Anwendung gemischt.

Bei der Polyaddition reagieren zwei Typen von Verbindungen miteinander, welche getrennt voneinander aufbewahrt werden und wesentlicher Bestandteil der jeweiligen Komponenten sind. Diese werden üblicherweise als Harz und die andere als Härter bezeichnet.

Die Einteilung der Klebstoffe erfolgt typischerweise über deren Harzkomponente.

Epoxydharzklebstoffe enthalten Verbindungen mit Oxirangruppen, üblicherweise als Glycidylether vorliegend. Der weitgehend größte Anteil der Epoxydharzklebstoffe enthält Glycidylether von Bisphenolen, insbesondere von Bisphenol-A und/oder Bisphenol-F, als Grundbaustein. Als Härter von zweikomponentigen Epoxydharzklebstoffen werden insbesondere Polyamine und/oder Polymerkaptane eingesetzt. Bevorzugt werden Polyamine.

Zweikomponentige Polyurethanklebstoffe enthalten Polyisocyanate, insbesondere in Form von Isocyanat-Gruppen aufweisenden Prepolymeren. Als Härter kommen Polyamine und/oder Polyole und/oder Polymerkaptane zum Einsatz. Die zweikomponentigen Klebstoffe sind üblicherweise reagieren bedeutend schneller als zweikomponentige Epoxidharzklebstoffe.

Klebstoffe, welche durch eine radikalische Polymerisation vernetzen sind eine weitere wichtige Klasse von geeigneten zweikomponentigen Klebstoffen. Hierbei wird eine Komponente durch das Zumischen eines Initiators, welche freie Radikale freisetzt, vernetzt. Als zu vernetzende Verbindungen, welche Bestandteil der ersten Komponente bilden, werden üblicherweise Verbindungen, die Doppelbindungen enthalten, verwendet. Beispiele hierfür sind insbesondere Styrole, Vinylacetate, Acrylonitril, Acrylate und Methacrylate eingesetzt. Besonders geeignet sind die Säuren und Ester der Acrylsäure und/oder Methacrylsäure. Als Radikalinitiator, welcher die zweite Komponente oder einen Bestandteil davon darstellt, werden üblicherweise Peroxide, insbesondere organische Peroxide, verwendet. Einer der wichtigsten Initiatoren ist Benzoylperoxid.

Diese Klebstoffe verfügen über den großen Vorteil einer schnellen Vernetzung und einer relativ geringen Empfindlichkeit gegenüber Mischfehlern.

Für die vorliegende Erfindung sind bevorzugt einkomponentige hitzehärtende Epoxydharzklebstoffe, insbesondere mit erhöhter Schlagzähigkeit, wie sie beispielsweise in EP 1 359 202 A1 offenbart sind. Bevorzugt werden diese Klebstoffe als Rohbauklebstoffe im Fahrzeugbau eingesetzt.

Weiterhin bevorzugt sind einkomponentige Polyurethanklebstoffe, wie sie unter der Produktelinie Sikaflex^{®}, kommerziell von Sika Schweiz AG erhältlich sind. Insbesondere werden diese Klebstoffe zum Verkleben bei Raumtemperatur verwendet.

Als zweikomponentige Klebstoffe sind insbesondere zweikomponentige Polyurethanklebstoffe und (Meth)acrylatklebstoffe, wie sie unter den Produktelinien SikaPower^{®} respektive SikaFast^{®} kommerziell von Sika Schweiz AG erhältlich sind, bevorzugt.

Diese Klebstoffe werden bevorzugt dort eingesetzt in den Anwendungen, wo hohe Taktzeiten und/oder schneller Festigkeitsaufbau erwünscht ist.

Insbesondere für den Fahrzeugbau ist es vorteilhaft, dass nach dem Aushärten des Klebstoffes die verklebten Werkstücke mit einer kathodischen Tauchlackierung lackiert werden. Dadurch können Komponenten der Karosserie hergestellt werden, die nach dem Verkleben der Einzelkomponenten einheitlich und nahezu ohne auffallende Nahtstellen lackiert werden können.

Ein Vorteil des beschriebenen Verfahrens zum Verkleben von Werkstücken aus Metallen oder Metalllegierungen mit einer hydratisierten Oxid- und/oder Hydroxidschicht besteht darin, dass durch das Vorbehandeln, das Aufbringen des Haftvermittlers und das Verkleben der Werkstücke eine korrosionsgeschützte Fläche entsteht.

Ein weiterer Vorteil, insbesondere im Falle der Anwendung von Plasmatechnik, ist die geringe Prozesszeit für das Vorbehandeln, für das Aufbringen und Nachbehandeln des Haftvermittlers und für das Verkleben. Zum einen ergibt sich die geringe Prozesszeit durch die schnelle Vor- und Nachbehandlung mit dem Plasmastrahl und zum anderen durch die geringe Einwirkzeit des Haftvermittlers.

Zudem ergibt sich eine KTL - Verträglichkeit der behandelten Flächen. Somit sind die Flächen geeignet, bei weiteren Lackierprozessen verwendet zu werden.

### Kathodische Tauchlackierung - KTL

Bei einer weiteren bevorzugten Ausgestaltung der vorliegenden Erfindung wird die Klebefläche mittels einer kathodische Tauchbeschichtung bzw. Tauchlackierung beschichtet. Diese Fähigkeit ist insbesondere bei der Anwendung der vorliegenden Erfindung beim Fahrzeugbau von Interesse. Denn die verklebten Werkstücke aus den beschriebenen Metalle oder Metalllegierungen sind in der Regel auch Teile der Karosserie, die vor und/oder nach dem Verkleben einem Lackierprozess unterworfen werden. Dazu wird überwiegend die zuvor genannte kathodische Tauchlackierung (KTL) eingesetzt.

Die Werkstücke werden dazu durch den gesamten Vorbehandlungsprozess sowie die Elektrotauchlackierung gefahren, die aus folgenden Arbeitsschritten bestehen:

Als erstes kommt die Vorbehandlung.
- Entfettung (Tauchen bei +60°C)
- Spülen (Tauchen in Betriebswasser)
- Aktivierung (Tauchen)
- Phosphatierung (Tauchen bei +45°C)
- Spülen (Tauchen in Betriebswasser)
- Passivierung (Tauchen)
- Spülen (Tauchen in VE Wasser)

Nach diesem Vorgang erfolgt der eigentliche Lackierprozess, das Elektrotauchlackieren. Das Elektrotauchlackieren ist ein Beschichtungsverfahren, welches elektrochemische Vorgänge nutzt, um Korrosionsschutzlack abzuscheiden. Ein Elektrotauchsystem legt dazu eine Gleichspannung an ein Werkstück an, welches in ein Lackbad mit gegensätzlich geladenen Lackpartikeln getaucht ist. Die Lackpartikel werden somit von dem Werkstück angezogen, auf ihm abgeschieden und bilden dort einen gleichmäßigen Film über die gesamte Oberfläche. Beschichtet wird so jede Spalte und Ecke, auch verdeckte Flächen, solange bis die vorgegebene Anziehung unterbunden wird und die KTL - Beschichtung beendet ist. Nachdem dieses geschehen ist, fährt das Werkstück durch Spülzonen, die mit voll entsalztem (VE) Wasser arbeiten. Nach dem Verlassen der Spülzonen gelangen die beschichteten Teile in den Einbrennofen. Dort vernetzt der Lackfilm und härtet aus, um maximale Beständigkeiten der Beschichtungen zu erreichen.

Daher ist es wünschenswert, dass die mit dem Haftvermittler beschichtete Klebefläche auch mit dem herkömmlichen Verfahren lackiert werden kann. Dabei kommt es nicht nur darauf an, dass die verklebte Klebefläche, also der Klebstoff selber tauchlackierbar ist, sondern dass auch die Haftvermittler aufweisenden Klebeflächen diese Eigenschaft aufweisen. Denn der vom Klebstoff eingenommene Bereich deckt in der Regel nicht vollständig die Fläche des Haftvermittlers ab, sondern es treten über die Klebstoffabschnitte hinaus Bereiche auf, deren äußere Fläche auch nach dem Verkleben mit dem Haftvermittler belegt ist. Auch diese Bereiche sollen möglichst tauchlackierbar sein, da dann die KTL-Beschichtung bis an die Klebeschicht heranreicht und somit selbst korrosionsgeschützt ist. Im Bereich der Klebestelle übernimmt der Klebstoff die Aufgabe eines passiven Korrosionsschutzes, wobei dafür eine gute und möglichst vollflächige Haftung des Klebstoffes mit der Oberfläche wesentlich ist. Unter passivem Korrosionsschutz wird dabei verstanden, dass der Klebstoff eine Barrierewirkung gegenüber den zur Korrosion führenden Stoffen hat, selbst aber nicht aktiv eine Korrosion der Oberfläche verhindert. Im Idealfall ist die Haftungseigenschaft des Klebers so gut wie die der durch KTL abgeschiedenen Lackschicht oder bevorzugter Weise besser.

Während der Tauchbeschichtung bzw. Tauchlackierung werden mindestens zwei Schichten aufgebracht, wobei die Schichtdickendifferenz kleiner als 25 % bezogen auf die dünnste Schicht beträgt. Dadurch wird ein gleichmäßiger und stabiler Aufbau erreicht.

Das oben aufgezeigte technische Problem wird erfindungsgemäß auch durch ein Werkstück gelöst, das eine Klebefläche aufweist, wobei zumindest die Klebefläche aus einem Metall oder einer Metalllegierung mit einer hydratisierten Oxid- und/oder Hydroxidschicht besteht. Erfindungsgemäß ist die Klebefläche nach einem Verfahren nach einem der Ansprüche 15 bis 23 verklebt.

Insbesondere ist das Werkstück eine Fahrzeugkarosse, insbesondere eine Automobilkarosse. Bevorzugt ist es ebenso, dass das Werkstück ein Teil eines Fahrzeuges, insbesondere eines Automobils ist.

### Spezielle Beschreibung von Ausführungsbeispielen

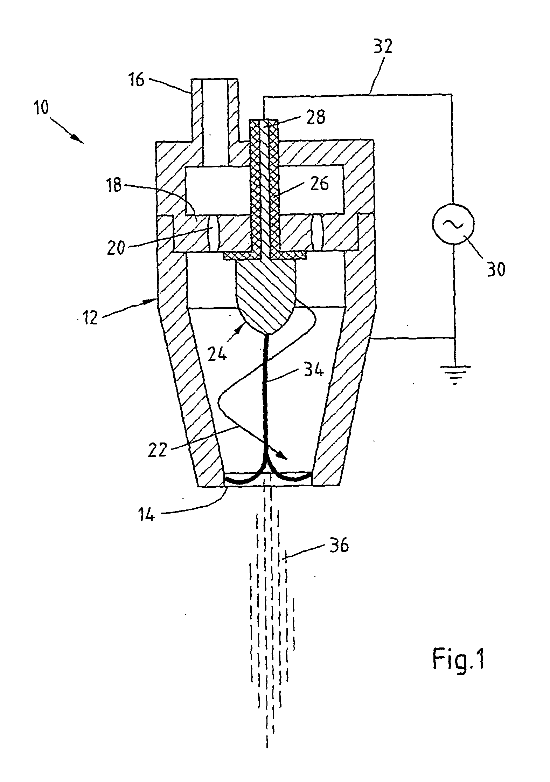

Nachfolgend werden ein Ausführungsbeispiel einer Plasmaquelle, die zur Durchführung des Verfahrens geeignet ist, und chemische Zusammensetzungen von Haftvermittlern, die im Rahmen der Erfindung eingesetzt werden können, näher erläutert. Dazu wird auf die beigefügte Zeichnung Bezug genommen wird. In der Zeichnung zeigt die einzige Fig. 1 eine Plasmadüse zum Erzeugen eines Plasmastrahls in einer schematischen Darstellung.

### Plasmaquelle

Die in Fig. 1 gezeigte Plasmadüse 10 weist ein Düsenrohr 12 aus Metall auf, das sich konisch zu einer Auslassöffnung 14 verjüngt. Am der Auslassöffnung 14 entgegengesetzten Ende weist das Düsenrohr 12 einen Einlass 16 für ein Arbeitsgas auf, beispielsweise für Druckluft. Eine Zwischenwand 18 des Düsenrohres 12 weist einen Kranz von schräg in Umfangsrichtung angestellten Bohrungen 20 auf und bildet so eine Dralleinrichtung für das Arbeitsgas. Der stromabwärtige, konisch verjüngte Teil des Düsenrohres wird deshalb von dem Arbeitsgas in der Form eines Wirbels 22 durchströmt, dessen Kern auf der Längsachse des Düsenrohres verläuft.

An der Unterseite der Zwischenwand 18 ist mittig eine Elektrode 24 angeordnet, die koaxial in den verjüngten Abschnitt des Düsenrohres hineinragt. Die Elektrode 24 wird durch einen rotationssymmetrischen, an der Spitze abgerundeten Stift gebildet, beispielsweise aus Kupfer, der durch einen Isolator 26 elektrisch gegenüber der Zwischenwand 18 und den übrigen Teilen des Düsenrohres isoliert ist. Über einen isolierten Schaft 28 wird an die Elektrode 24 eine hochfrequente Wechselspannung angelegt, die von einem Hochfrequenztransformator 30 erzeugt wird. Die Spannung ist variabel regelbar und beträgt beispielsweise 500 V oder mehr, vorzugweise 2 - 5 kV, insbesondere mehr als 5 kV. Die Frequenz liegt beispielsweise in der Größenordnung von 1 bis 30 kHz, vorzugsweise im Bereich von 20 kHz, und ist vorzugsweise ebenfalls regelbar. Der Schaft 28 ist mit dem Hochfrequenztransformator 30 über ein flexibles Hochspannungskabel 32 verbunden. Der Einlass 16 ist über einen nicht gezeigten Schlauch mit einer Druckluftquelle mit variablem Durchsatz verbunden, die vorzugsweise mit dem Hochfrequenzgenerator 30 zu einer Versorgungseinheit kombiniert ist. Die Plasmadüse 10 lässt sich so mühelos mit der Hand oder mit Hilfe eines Roboterarms bewegen. Das Düsenrohr 12 und die Zwischenwand 18 sind geerdet.

Durch die angelegte Spannung wird eine Hochfrequenzentladung in der Form einer Bogenentladung 34 zwischen der Elektrode 24 und dem Düsenrohr 12 erzeugt. Aufgrund der drallförmigen Strömung des Arbeitsgases wird dieser Lichtbogen jedoch im Wirbelkern auf der Achse des Düsenrohres 12 kanalisiert, so dass er sich erst im Bereich der Auslassöffnung 14 zur Wand des Düsenrohres 12 verzweigt. Das Arbeitsgas, das im Bereich des Wirbelkerns und damit in unmittelbarer Nähe des Lichtbogens 34 mit hoher Strömungsgeschwindigkeit rotiert, kommt mit dem Lichtbogen in innige Berührung und wird dadurch zum Teil in den Plasmazustand überführt, so dass ein Strahl 36 eines verhältnismäßig kühlen atmosphärischen Plasmas, etwa in der Gestalt einer Kerzenflamme, aus der Auslassöffnung 14 der Plasmadüse 10 austritt.

Die dargestellte Ausführungsform zeigt ein Beispiel einer Reihe von verschiedenen Ausführungsformen von Plasmaquellen. Daher ist das beschriebene Ausführungsbeispiel nicht beschränkend für den Schutzbereich des Gegenstandes zu verstehen.

### Haftvermittler

Der im beschriebenen Verfahren verwendete Haftvermittler enthält eine Zusammensetzung oder besteht aus mindestens einer Haftvermittlersubstanz, die ausgewählt ist aus der Gruppe umfassend Organo-Siliziumverbindungen, Organo-Titanverbindungen und Organo-Zirkoniumverbindungen. Diese Verbindungen haben sich als besonders vorteilhaft herausgestellt. Jedoch ist die Erfindung nicht auf diese Verbindungen beschränkt.

Grundsätzlich sind als Organo-Siliziumverbindungen alle dem Fachmann bekannte Organo-Siliziumverbindungen, welche als Haftvermittler eingesetzt werden, geeignet. Bevorzugt trägt die Organo-Siliziumverbindung mindestens eine Gruppe, welche unter dem Einfluss von Wasser hydrolysiert und zur Bildung einer Silanolgruppe führt. Bevorzugt trägt eine solche Organo-Siliziumverbindung mindestens eine, insbesondere mindestens zwei, Alkoxygruppe, welche über eine Sauerstoff-Silizium-Bindung direkt an ein Siliziumatom gebunden ist oder sind. Weiterhin trägt die Organo-Siliziumverbindung mindestens einen Substituenten, welcher über eine Silizium-Kohlenstoffbindung an das Siliziumatom gebunden ist, und welcher gegebenenfalls eine funktionelle Gruppe aufweist, welche ausgewählt ist aus der Gruppe umfassend Oxiran-, Hydroxy-, (Meth)acryloxy-, Amino-, Mercapto- und Vinylgruppe. Solche Amino-, Mercapto- oder Oxiran-Gruppen aufweisenden Organo-Siliziumverbindungen werden auch als "Aminosilane", "Mercaptosilane" oder "Epoxysilane" bezeichnet. Insbesondere handelt es sich bei der Organo-Siliziumverbindung um eine Verbindung der Formel (I)

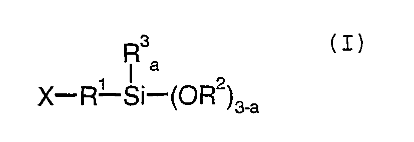

Der Substituent R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen. Der Substituent R² steht für eine Alkylgruppe mit 1 bis 5 C-Atomen, insbesondere für Methyl oder Ethyl.

Weiterhin steht der Substituent R³ für eine Alkylgruppe mit 1 bis 8 C-Atomen, insbesondere Methyl und der Substituent X steht für ein H, oder eine funktionelle Gruppe, welche ausgewählt ist aus der Gruppe umfassend Oxiran, OH, (Meth)acryloxy, Amin, SH und Vinyl.

Schließlich steht a für einen der Werte 0,1 oder 2. Bevorzugt ist a = 0.

Als Substituenten R¹ bevorzugt ist Methylen-, Propylen-, Methylpropylen-, Butylen- oder Dimethylbutylengruppe. Bevorzugt ist R¹ eine Propylengruppe.

Geeignete Organo-Siliziumverbindungen sind kommerziell gut erhältlich und sind insbesondere bevorzugt ausgewählt aus der Gruppe umfassend 3-Methacryloxypropyltrialkoxysilane, 3-Aminopropyltrimethoxysilan, Bis-[3-(trimethoxysilyl)-propyl]-amin, Tris-[3-(trimethoxysilyl)-propyl]-amin, 3-Aminopropyltriethoxysilan, N-(2-Aminoethyl)-3-aminopropyltrimethoxysilan, N-(2-Aminoethyl)-3-aminopropyl-triethoxysilan, 3-Aminopropyl-dimethoxymethylsilan, 3-Amino-2-methylpropyl-trimethoxysilan, 4-Aminobutyltrimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyltrimethoxysilan, Aminomethyl-dimethoxymethylsilan, Aminomethylmethoxydimethylsilan, N-(2-Aminoethyl)-3-aminopropyl-dimethoxymethylsilan, 7-Amino-4-oxaheptyldimethoxymethylsilan, (3-(trimethoxysilyl)propyl]harnstoff, 1,3,5-tris[3-(trimethoxysilyl)propyl]-1,3,5-triazine-2,4,6(1H,3H,5H)-trion-harnstoff (=Isocyanurat von 3-isocyanatopropyltrimethoxy-silane), 3-Methacryloxypropyltriethoxysilan, 3-Methacryloxypropyltrimethoxysilan, 3-Glycidyloxypropyltrimethoxysilan, 3-Glycidyloxypropyltriethoxysilan, 3-Mercaptopropyltriethoxysilan, 3-Mercaptopropyltrimethoxysilan, Vinyltrimethoxysilan, Vinyltriethoxysilan, Methyltrimethoxysilan, Octyltrimethoxysilan, Dodecyltrimethoxysilan und Hexadecyltrimethoxysilan sowie Addukte von Epoxysilanen mit Mercaptosilanen oder mit Aminosilanen.

Bevorzugte Addukte von Epoxysilanen mit Aminosilanen oder Mercaptosilanen sind solche, wie sie als Reaktionsprodukt D in der EP 1 382 625 A1 beschrieben sind.

Als Organo-Siliziumverbindungen meist bevorzugt sind Aminosilane, insbesondere solche mit primären Aminogruppen, bevorzugt 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan sowie Mischungen davon.

Grundsätzlich sind als Organo-Titanverbindung alle dem Fachmann bekannte Organo-Titanverbindungen, welche als Haftvermittler eingesetzt werden, geeignet. Bevorzugt trägt die Organo-Titanverbindung mindestens eine Gruppe, welche unter dem Einfluss von Wasser hydrolysiert und zur Bildung einer Ti-OH Gruppe führt. Bevorzugt trägt eine solche Organo-Titanverbindung mindestens eine funktionelle Gruppe trägt, welche ausgewählt ist aus der Gruppe umfassend Alkoxygruppe, Sulfonatgruppe, Carboxylatgruppe Acetylacetonat, oder Mischungen davon trägt, und welche über ein Sauerstoff-Titan-Bindung direkt an ein Titanatom gebunden ist.

Als Alkoxygruppen haben sich insbesondere sogenannte Neoalkoxy-Substituenten, insbesondere der folgenden Formel besonders geeignet erwiesen

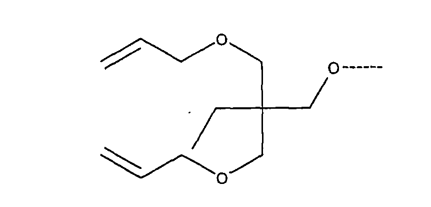

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel

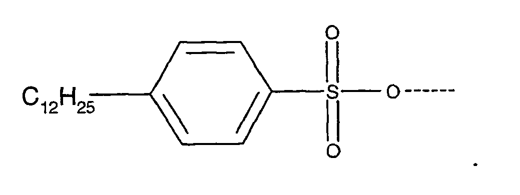

Als Carboxylatgruppen haben sich insbesondere Carboxylate von Fettsäuren besonders geeignet erwiesen. Als bevorzugte Carboxylate gilt Decanoat.

In allen den obigen Formel zeigt die gestrichelte Bindung hierbei die Verbindung zum Titanatom an.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React^{®} KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA1, LICA 09, LICA 12, LICA 38, LICA 44, LICA 97, LICA 99, KR OPPR, KROPP2 von Kenrich Petrochemicals oder Tyzor ^{®} ET, TPT, NPT, BTM AA, AA-75, AA-95, AA-105, TE, ETAM von DuPont. Bevorzugt gelten Ken-React^{®} KR 7, KR 9S, KR 12, KR 26S, KR 38S, KR44, LICA 09, LICA 44, NZ 44,sowie Tyzor^{®} ET, TPT, NPT, BTM, AA, AA-75, AA-95, AA-105, TE, ETAM von DuPont.

Grundsätzlich sind als Organo-Zirkoniumverbindung alle dem Fachmann bekannte Organo-Zirkoniumverbindungen, welche als Haftvermittler eingesetzt werden, geeignet. Bevorzugt trägt die Organo-Zirkoniumverbindung mindestens eine Gruppe, welche unter dem Einfluss von Wasser hydrolysiert und zur Bildung einer Zr-OH Gruppe führt. Bevorzugt trägt eine solche Organo-Zirkoniumverbindung mindestens eine funktionelle Gruppe trägt, welche ausgewählt ist aus der Gruppe umfassend Alkoxygruppe, Sulfonatgruppe, Carboxylatgruppe, Phosphat oder Mischungen davon trägt, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der folgenden Formel besonders geeignet erwiesen

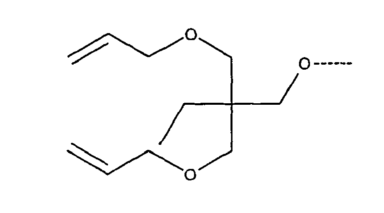

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel

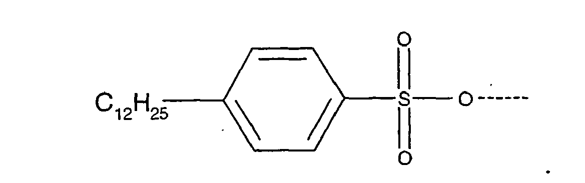

Als Carboxylatgruppen haben sich insbesondere Carboxylate von Fettsäuren besonders geeignet erwiesen. Als bevorzugte Carboxylate gilt Stearat.

In allen den obigen Formel zeigt die gestrichelte Bindung hierbei die Verbindung zum Zirkoniumatom an.

Organo-Zirkoniumverbindungen sind kommerziell erhältlich, beispielsweise NZ 38J, NZ TPPJ, KZ OPPR, KZ TPP, NZ 01, NZ 09, NZ 12, NZ38, NZ 44, NZ 97 von Kenrich Petrochemicals. Bevorzugt ist Ken-React^{®} NZ 44.

Die Haftvermittlerzusammensetzung kann Mischungen von mindestens einer Organo-Siliziumverbindung mit mindestens einer Organo-Titanverbindung und/oder mit mindestens einer Organo-Zirkoniumverbindung umfassen. Ebenso kann sie Mischungen von mindestens einer Organo-Titanverbindung mit mindestens einer Organo-Zirkoniumverbindung enthalten. Bevorzugt enthält die Haftvermittlerzusammensetzung Mischungen von mindestens einer Organo-Siliziumverbindung mit mindestens einer Organo-Titanverbindung.

Besonders bevorzugt sind Mischungen von mehreren Organo-Siliziumverbindungen oder Mischungen von einer Organo-Siliziumverbindung mit einer Organo-Titanverbindung. Als Mischungen von Organo-Siliziumverbindungen haben sich besonders gut Mischungen von Haftvermittlersubstanzen der Formeln (I) erwiesen, wobei mindestens eine dieser Substituenten H als Substituenten X trägt und mindestens eine dieser Substanzen eine funktionelle Gruppe, welche ausgewählt ist aus der Gruppe umfassend Oxiran, (Meth)acryloxy, Amin, SH und Vinyl, als Substituenten X trägt. Bevorzugt handelt es sich bei diesen Mischungen um mindestens einem Alkyl-Trialkoxysilan mit einem Aminoalkyl-Trialkoxysilan und/oder Mercaptoalkyl-Trialkoxysilan.

Bevorzugt sind leichtflüchtige Lösungsmittel wie Wasser, Alkohole, insbesondere Ethanol, Isopropanol, Butanol, Aldehyde oder Ketone, insbesondere Aceton, Methylethylketon, Kohlenwasserstoffe, insbesondere Hexan, Heptan, Cyclohexan, Xylol, Toluol, White Spirit sowie deren Mischungen. Als besonders bevorzugt gelten Ethanol, Methanol, Isopropanol oder Hexan, sowie Mischungen davon. Der Gehalt an Lösungsmittel beträgt üblicherweise zwischen 0 und 99 Gew.-%, insbesondere zwischen 50 und 99 Gew.-%, bevorzugt zwischen 90 und 99 Gew.-%, bezogen auf das Gewicht der Haftvermittlerzusammensetzung. Weiterhin kann die Haftvermittlerzusammensetzung bei Bedarf übliche Additive, insbesondere Verlaufsmittel, Entschäumer, Tenside, Biozide, Antiabsetzmittel, Stabilisatoren, Inhibitoren, Pigmente, Farbstoffe oder Geruchsstoffe, enthalten.

Weiterhin kann es von Vorteil sein, insbesondere bei Verwendung eines Lackbindemittels, wenn die Haftvermittlerzusammensetzung einen Füllstoff enthält. Bevorzugte Füllstoffe sind Ruße, pyrogene Kieselsäuren und Kreiden, deren Oberflächen bei Bedarf modifiziert worden ist.

Die Herstellung der Haftvermittlerzusammensetzung erfolgt auf dem Fachmann an sich bekannten Art und Weise, typischerweise unter Ausschluss von Feuchtigkeit. Die Haftvermittlerzusammensetzung werden nach der Herstellung in geeigneten Behältern gelagert, welche den Kontakt mit Feuchtigkeit während der Lagerung verhindern. Bevorzugt sind Behältnisse Kunststoffen, Glas und Metallen. Besonders bevorzugt sind Aluminiumbehältnisse, insbesondere Aluminiumflaschen mit dichten Deckeln.

Die Haftvermittlerzusammensetzung wird durch Aufsprühen, insbesondere als Film, oder durch Auftragen mittels Tuch, Filz oder Pinsel aufgetragen. Bei der Anwendung eines Tuches wird typischerweise ein Textil, wie ein Papiertuch (Tela oder Kleenex^{®}) mit der Haftvermittlerzusammensetzung getränkt und auf die zu behandelnde Oberfläche appliziert.

## Patentansprüche

1. Verfahren zur Bearbeitung einer Klebefläche eines Werkstückes, wobei zumindest die Klebefläche aus einem Metall oder einer Metalllegierung mit einer hydratisierten Oxid- und/oder Hydroxidschicht besteht,
- bei dem die Klebefläche gereinigt wird,
- bei dem die Klebefläche aktiviert wird,
- bei dem die Klebefläche zumindest teilweise mit einem Haftvermittler beschichtet wird und
- bei dem der Haftvermittler durch eine Nachbehandlung chemisch umgewandelt wird.

2. Verfahren nach Anspruch 1,
bei dem die Klebefläche mit einem atmosphärischen Plasmastrahl gereinigt wird.

3. Verfahren nach Anspruch 1 oder 2,
bei dem die Klebefläche mechanisch, chemisch und/oder elektrochemisch oder mittels eines Strahlverfahrens, insbesondere mittels Laser, UV-Licht oder Elektronenstrahl, gereinigt wird.

4. Verfahren nach Anspruch 3,
bei dem die hydratisierte Oxid- und/oder Hydroxidschicht zumindest teilweise vom Werkstück abgelöst wird.

5. Verfahren nach einem der Ansprüche 1 bis 3,
bei dem die Klebefläche mit einem atmosphärischen Plasmastrahl aktiviert wird.

6. Verfahren nach Anspruch 5,
bei dem die hydratisierte Oxid- und/oder Hydroxidschicht dehydratisiert und verfestigt wird.

7. Verfahren nach Anspruch 6,
bei das Metall oder die Metalllegierung mit einer hydratisierten Oxid- und/oder Hydroxidschicht ein Leichtmetallwerkstoff, insbesondere Aluminium oder eine Aluminiumlegierung, ist.

8. Verfahren nach einem der Ansprüche 1 bis 7,
bei dem ein Haftvermittler verwendet wird, der eine Zusammensetzung enthält oder aus mindestens einer Haftvermittlersubstanz besteht, welche ausgewählt ist aus der Gruppe umfassend Organo-Siliziumverbindungen, Organo-Titanverbindungen und Organo-Zirkoniumverbindungen.

9. Verfahren nach einem der Ansprüche 1 bis 8,
bei dem der Haftvermittler ein Lösungsmittel, insbesondere ein leichtflüchtiges Lösungsmittel aufweist.

10. Verfahren nach einem der Ansprüche 1 bis 9,
bei dem der Haftvermittler ein Lackbindemittel aufweist.

11. Verfahren nach einem der Ansprüche 1 bis 10,
bei dem der Haftvermittler einen Füllstoff aufweist.

12. Verfahren nach einem der Ansprüche 1 bis 11,
bei dem der Haftvermittler mittels eines atmosphärischen Plasmastrahls nachbehandelt wird.

13. Verfahren nach Anspruch 12,
bei dem der Haftvermittler mittels einer Wärmebehandlung weiter nachbehandelt wird.

14. Verfahren nach Anspruch 13,
bei dem der Haftvermittler mindestens 5 min, vorzugsweise mindestens 10 min, bei mindestens 140°C, vorzugsweise bei mindestens 155°C, insbesondere bei mindestens 170°C wärmebehandelt wird.

15. Verfahren zum Verkleben von zwei Werkstücken, wobei mindestens ein Werkstück aus einem Metall oder einer Metalllegierung mit einer hydratisierte Oxid- und/oder Hydroxidschicht besteht und wobei die Werkstücke jeweils mindestens eine Klebefläche aufweisen,
- bei dem die Klebefläche des mindestens einen Werkstückes aus einem Metall oder einer Metalllegierung mit einer hydratisierte Oxid- und/oder Hydroxidschicht mit einem Verfahren nach einem der Ansprüche 1 bis 14 bearbeitet wird,
- bei dem auf mindestens eine Klebefläche ein Klebstoff aufgebracht wird,
- bei dem die Werkstücke mit ihren Klebeflächen in Anlage aneinander gebracht werden und
- bei dem der Klebstoff ausgehärtet wird.

16. Verfahren nach Anspruch 15,
bei dem beide Werkstücke aus einem Metall oder einer Metalllegierung mit einer hydratisierte Oxid- und/oder Hydroxidschicht bestehen.

17. Verfahren nach Anspruch 15 oder 16,
bei das Metall oder die Metalllegierung mit einer hydratisierte Oxid- und/oder Hydroxidschicht ein Leichtmetallwerkstoff, insbesondere Aluminium oder eine Aluminiumlegierung, ist.

18. Verfahren nach einem der Ansprüche 15 bis 17,
bei dem als Klebstoff ein einkomponentiger Klebstoff verwendet wird.

19. Verfahren nach Anspruch 18,
bei dem als Klebstoff ein Epoxydharz und/oder ein Polyurethan verwendet wird.

20. Verfahren nach einem der Ansprüche 15 bis 17,
bei dem als Klebstoff ein zweikomponentiger Klebstoff, insbesondere Epoxydklebstoff und/oder ein Polyurethanklebstoff verwendet wird.

21. Verfahren nach Anspruch 20,
bei dem eine Härterkomponente, vorzugsweise bestehend aus Polyaminen, Polycarbonsäuren, Isocyanaten oder hydroxyhaltigen Harzen, verwendet wird.

22. Verfahren nach einem der Ansprüche 15 bis 21,
bei dem nach dem Aushärten des Klebstoffes die verklebten Werkstücke mit einer kathodischen Tauchlackierung lackiert werden.

23. Verfahren nach Anspruch 22,
bei dem in der Tauchlackierung mindestens zwei Schichten aufgebracht werden und bei dem die Schichtdickendifferenz kleiner als 25 % bezogen auf die dünnste Schicht beträgt.

24. Werkstück,
mit einer Klebefläche, wobei zumindest die Klebefläche aus einem Metall oder einer Metalllegierung mit einer hydratisierten Oxid- und/oder Hydroxidschicht besteht,
**dadurch gekennzeichnet,**
**dass** die Klebefläche nach einem Verfahren nach einem der Ansprüche 15 bis 23 verklebt ist.

25. Werkstück nach Anspruch 24,
wobei das Werkstück eine Fahrzeugkarosse, insbesondere eine Automobilkarosse ist.

26. Werkstück nach Anspruch.24,
wobei das Werkstück ein Teil eines Fahrzeuges, insbesondere eines Automobils ist.

## Claims

1. A method for treating a bond area of a workpiece, the bond area at least being composed of a metal or metal alloy having a hydrated oxide and/or hydroxide layer,
- wherein the bond area is cleaned,
- wherein the bond area is activated,
- wherein the bond area is at least partly coated with an adhesion promoter, and
- wherein the adhesion promoter is chemically transformed by an after treatement.

2. The method of claim 1, wherein the bond area is cleaned with an atmospheric plasma jet.

3. The method of claim 1 or 2, wherein the bond area is cleaned mechanically, chemically and/or electrochemically or by means of a beam process, in particular by means of laser, UV light or electron beam.

4. The method of claim 3, wherein the hydrated oxide and/or hydroxide layer is at least partly detached from the workpiece.

5. The method of any one of claims 1 to 3, wherein the bond area is activated with an atmospheric plasma jet.

6. The method of claim 5, wherein the hydrated oxide and/or hydroxide layer is dehydrated and solidified.

7. The method of claim 6, wherein the metal or metal alloy having a hydrated oxide and/or hydroxide layer is a light metal material, especially aluminum or an aluminum alloy.

8. The method of any one of claims 1 to 7, wherein an adhesion promoter is used which comprises a composition or is composed of at least one adhesion promoter substance selected from the group encompassing organosilicon compounds, organotitanium compounds, and organozirconium compounds.

9. The method of any one of claims 1 so 8, wherein the adhesion promoter comprises a solvent, in particular a volatile solvent.

10. the method of any one of claims 1 to 9, wherein the adhesion promoter comprises a film-forming binder.

11. The method of any one of claims 1 to 10, wherein the adhesion promoter comprises a filler.

12. The method of any one of claims 1 to 12, wherein the adhesion promoter is aftertreated by means of an atmospheric plasma jet.

13. The method of claim 12, wherein the adhesion promoter is further aftertreated by means of a heat treatment.

14. The method of claim 13, wherein the adhesion promoter is heat-treated for at least 5 min, preferably at least 10 min, at at least 140°C, preferably at at least 155°C, in particular at at least 170°C.

15. A method of adhesively bonding two workpieces, at least one workpiece being composted of a metal or metal alloy having a hydrated oxide and/or hydroxide layer, and the workpieces each having at least one bond area,
- wherein the bond area of the at least one workpiece made of a metal or metal alloy having a hydrated oxide and/or hydroxide layer is treated with a method of any one of claims 1 to 14,
- wherein an adhesive is applied to at least one bond area,
- wherein the workpieces are brought into contact with one another by their bond areas, and
- wherein the adhesive is cured.

16. The method of claim 15, wherein both workpieces are composed of a metal or metal alloy having a hydrated oxide and/or hydroxide layer.

17. The method of claim 15 or 16, wherein the metal or metal alloy having a hydrated oxide and/or hydroxide layer is a light metal material, especially aluminum or an aluminum alloy.

18. The method of any one of claims 15 to 17, wherein the adhesive used is a one-component adhesive.

19. The method of claim 18, wherein the adhesive used is an epoxy resin and/or a polyurethane.

20. The method of any one or claims 15 to 17, wherein the adhesive used is a two-component adhesive, in particular epoxy adhesive and/or a polyurethane adhesive.

21. The method of claim 20, wherein a curing component, preferably composed of polyamines, polycarboxylic acids, isocyanates or hydroxy-containing resins, is used.

22. The method of any one of claims 15 to 21, wherein, after the adhesive has cured, the bonded workpieces are coated with a cathodic electrodeposition coating.

23. The method of claim 22, wherein, in the electrodeposition coating, there are at least two layers applied, and wherein the difference in layer thickness is less than 25%, based on the thinnest layer.

24. A workpiece
having a bond area, the bond area at least being composed of a metal or metal alloy having a hydrated oxide and/or hydroxide layer,
**characterized in that**
the bond area has been bonded by a method of any one of claims 15 to 23.

25. The workpiece of claim 24, the workpiece being a vehicle body, in particular an automobile body.

26. The workpiece of claim 24, the workpiece being part of a vehicle, in particular of an automobile.

## Revendications

1. Procédé pour usiner une surface adhésive d'une pièce de fabrication, dans lequel au moins la surface adhésive est constituée d'un métal ou d'un alliage métallique ayant une couche d'oxyde et/ou d'hydroxyde hydratée,
- dans lequel on nettoie la surface adhésive,
- dans lequel on active la surface adhésive,
- dans lequel on revêt au moins partiellement d'un promoteur d'adhérence la surface adhésive, et
- dans lequel on soumet à une conversion chimique le promoteur d'adhérence par un post-traitement.

2. Procédé selon la revendication 1, dans lequel on nettoie la surface adhésive avec un jet de plasma à pression atmosphérique.

3. Procédé selon la revendication 1 ou 2, dans lequel on nettoie la surface adhésive par voie mécanique, chimique et/ou électrochimique, ou par un procédé au jet, en particulier par un laser, une lumière UV ou un jet d'électrons.

4. Procédé selon la revendication 3, dans lequel on détache au moins partiellement de la pièce de fabrication la couche d'oxyde et/ou d'hydroxyde hydratée.

5. Procédé selon l'une des revendications 1 à 3, dans lequel on active la surface adhésive avec un jet de plasma à pression atmosphérique.

6. Procédé selon la revendication 5, dans lequel on déshydrate et consolide la couche d'oxyde et/ou d'hydroxyde hydratée.

7. Procédé selon la revendication 6, dans lequel le métal et/ou l'alliage métallique ayant une couche d'oxyde et/ou d'hydroxyde hydratée est un matériau de type métal léger, en particulier l'aluminium ou un alliage d'aluminium.

8. Procédé selon l'une des revendications 1 à 7, dans lequel on utilise un promoteur d'adhérence qui contient une composition ou est constitué d'au moins une substance formant promoteur d'adhérence, qui est choisie dans le groupe comprenant les composés organiques du silicium, les composés organiques du titane et les composés organiques du zirconium.

9. Procédé selon l'une des revendications 1 à 8, dans lequel le promoteur d'adhérence comprend un solvant, en particulier un solvant très volatil.

10. Procédé selon l'une des revendications 1 à 9, dans lequel le promoteur d'adhérence comprend un liant pour vernis.

11. Procédé selon l'une des revendications 1 à 10, dans lequel le promoteur d'adhérence comprend une matière de charge.

12. Procédé selon l'une des revendications 1 à 11, **caractérisé en ce que** l'on soumet à un post-traitement le promoteur d'adhérence à l'aide d'un jet de plasma à pression atmosphérique.

13. Procédé selon la revendication 12, dans lequel on soumet à un post-traitement supplémentaire le promoteur d'adhérence à l'aide d'un traitement thermique.

14. Procédé selon la revendication 13, dans lequel on soumet le promoteur d'adhérence à un traitement thermique pendant au moins 5 minutes, de préférence pendant au moins 10 minutes, à au moins 140°C, de préférence à au moins 155°C, en particulier à au moins 170°C.

15. Procédé pour coller deux pièces de fabrication, dans lequel au moins une pièce de fabrication est constituée d'un métal ou d'un alliage métallique ayant une couche d'oxyde et/ou d'hydroxyde hydratée, et les pièces en oeuvre comprennent chacune au moins une surface adhésive,
- dans lequel on usine par un procédé selon l'une des revendications 1 à 14 la surface adhésive de l'au moins une pièce de fabrication en un métal ou un alliage métallique ayant une couche d'oxyde et/ou d'hydroxyde hydratée,
- dans lequel on applique un adhésif sur au moins une surface adhésive,
- dans lequel on place en appui l'une contre l'autre les pièces de fabrication par leurs surfaces adhésives, et
- dans lequel on durcit l'adhésif.

16. Procédé selon la revendication 15, dans lequel les deux pièces de fabrication sont constituées d'un métal ou d'un alliage métallique ayant une couche d'oxyde et/ou d'hydroxyde hydratée.

17. Procédé selon la revendication 15 ou 16, dans lequel le métal et/ou l'alliage métallique ayant une couche d'oxyde et/ou d'hydroxyde hydratée est un matériau de type métal léger, en particulier l'aluminium ou un alliage d'aluminium.

18. Procédé selon l'une des revendications 15 à 17, dans lequel on utilise en tant qu'adhésif un adhésif monocomposant.

19. Procédé selon la revendication 18, dans lequel on utilise en tant qu'adhésif une résine époxyde et/ou un polyuréthanne.

20. Procédé selon l'une des revendications 15 à 17, dans lequel on utilise en tant qu'adhésif un adhésif bicomposant, en particulier un adhésif époxyde et/ou une colle polyuréthanne.

21. Procédé selon la revendication 20, dans lequel on utilise un composant durcisseur, constitué de préférence de polyamines, d'acides polycarboxyliques, d'isocyanates ou de résines hydroxylées.

22. Procédé selon l'une des revendications 15 à 21, dans lequel, après le durcissement de l'adhésif, on vernit les pièces de fabrication collées, par un procédé de revêtement cathodique par immersion.

23. Procédé selon la revendication 22, dans lequel, lors du revêtement par immersion, on applique au moins deux couches, et dans lequel la différence d'épaisseur des couches est inférieure à 25 % par rapport à la couche la plus mince.

24. Pièce de fabrication comportant une surface adhésive, où au moins la surface adhésive est constituée d'un métal ou d'un alliage métallique ayant une couche d'oxyde et/ou d'hydroxyde hydratée, **caractérisée en ce que** la surface adhésive est collée par un procédé selon l'une des revendications 15 à 23.

25. Pièce de fabrication selon la revendication 24, où la pièce de fabrication est une carrosserie de véhicule, en particulier une carrosserie d'automobile.

26. Pièce de fabrication selon la revendication 24, où la pièce de fabrication est une partie d'un véhicule, en particulier d'une automobile.
